# EUROPEAN PATENT APPLICATION

(11) **EP 3 508 753 A1**
(43) Date of publication of application: **10.07.2019**
(21) Application number: 17845280.1
(22) Date of filing: 22.08.2017
(51) Int. Cl.: F16H 1/32, F16H 49/00, F16H 55/17

(54) **RIGID GEAR FOR HARMONIC REDUCER, HARMONIC REDUCER, AND ROBOT**

(30) Priority: 31.08.2016 CN 201610799174
(71) Applicant: BYD Company Limited, Shenzhen, Guangdong 518118 (CN)
(72) Inventor: TANG, Haijian, Shenzhen Guangdong 518118 (CN); ZHOU, Hu, Shenzhen Guangdong 518118 (CN); JIANG, Qiongyan, Shenzhen Guangdong 518118 (CN); XIE, Wei, Shenzhen Guangdong 518118 (CN); CHEN, Huiling, Shenzhen Guangdong 518118 (CN); OUYANG, Deyun, Shenzhen Guangdong 518118 (CN)
(74) Representative: m patent group
(86) International application number: PCT/CN2017/098460
(87) International publication number: WO 2018/040978

(57) **Abstract**

The invention provides a circular spline for a harmonic reducer, a harmonic reducer and a robot. The harmonic reducer includes a wave generator (11), a circular spline (12) and a flexspline (13), where the wave generator is arranged on an inner peripheral surface of the flexspline (13), the circular spline includes a flange (122), a rigid ring (123) and a flexible ring (124) which are coaxially arranged, an inner peripheral surface of the flexible ring (124) is provided with first gear teeth (121), second gear teeth (131) are arranged on an outer peripheral surface of the flexspline (13), and the first gear teeth engage with the second gear teeth.

## Description

### FIELD

The present disclosure relates to a harmonic reducer, in particular to a circular spline for a harmonic reducer, a harmonic reducer and a robot.

### BACKGROUND

Harmonic gear driving is a new type of driving which emerged with the development of space technology in the late 1950s, and belongs to planetary gear driving with small tooth difference. A harmonic reducer mainly consists of three basic components: a circular spline with an internal gear ring, a flexspline with an external gear ring and a wave generator. As a reducer, generally, the wave generator is configured as an input (active), the circular spline is fixed, and the flexspline is configured as an output. The wave generator is a rod-shaped component, and rolling bearings are arranged at both ends of the wave generator to form rolling wheels, which are mutually pressed with an inner wall of the flexspline through a flexible bearing. The flexspline is a thin-walled gear which can produce large elastic deformation. The wave generator is a component which can make the flexspline produce controllable elastic deformation. After the wave generator is installed in the flexspline, a section of the flexspline is forced to change from an original circular shape to an irregular curved surface through the flexible bearing. The teeth near the two ends of a major axis of the flexspline fully engage with the teeth of the circular spline, while the teeth near the two ends of a minor axis of the flexspline completely disengage from the circular spline. The teeth on other sections of the circumference of the flexspline are in a transitional state of engagement and disengagement. When the wave generator rotates continuously, the deformation of the flexspline changes constantly, so that the engaging state of the flexspline and the circular spline also changes constantly, from engaging-in to engaging to engaging-out to disengaging to engaging-in again...in cycles, thus allowing the slow rotation of the flexspline relative to the circular spline opposite to the wave generator.

Compared with common gear driving, harmonic gear driving has the advantages of high carrying capacity, large drive ratio, small size, light weight, high precision, low noise, etc., is also characterized in simple structure, small number of parts and easy installation, and is capable of transmitting motion and power to confined spaces, thus being widely used in electronics, aerospace, robots and other industries.

Although harmonic reducers have the plurality of advantages mentioned above, a traditional harmonic reducer still has the following defects: first, a circular spline of the traditional harmonic reducer is usually thick on the whole, has good rigidity and does not deform easily, which makes only the gear teeth at a major axis of a wave generator in an engaging state, resulting in low driving precision; and second, the gear teeth of the traditional harmonic reducer are made of metal materials, in order to meet the requirements of assembly and lubrication, a certain side clearance is left between circular spline teeth and flexspline teeth, and with the aggravation of gear wear, the side clearance gradually increases, causing the backlash of the harmonic reducer to increase, affecting the driving precision and driving stability of a harmonic gear, and even causing the harmonic reducer to fail.

### SUMMARY

One aspect of the present disclosure is to provide a circular spline for a harmonic reducer. The circular spline includes a flange, a rigid ring and a flexible ring which are coaxially arranged, where the rigid ring is axially positioned between the flange and the flexible ring, and an inner peripheral surface of the flexible ring is provided with first gear teeth.

According to one embodiment of the present disclosure, the outer diameter of the rigid ring is larger than the outer diameter of the flexible ring.

According to one embodiment of the present disclosure, the outer diameter of the rigid ring is larger than the maximum outer diameter of the deformed flexible ring.

According to one embodiment of the present disclosure, the rigid ring and the flexible ring are made of different materials.

According to one embodiment of the present disclosure, the rigid ring and the flexible ring are made of the same material.

According to one embodiment of the present disclosure, the wall thickness of the rigid ring is larger than the wall thickness of the flexible ring.

Another aspect of the present disclosure is to provide a harmonic reducer with higher driving precision.

In order to achieve the above objective, the present disclosure provides a harmonic reducer including a wave generator, the circular spline as described above and a flexspline, where the wave generator is arranged on an inner peripheral surface of the flexspline, second gear teeth are arranged on an outer peripheral surface of the flexspline, and the first gear teeth engage with the second gear teeth.

According to one embodiment of the present disclosure, a circular pitch of the first gear teeth is smaller than a circular pitch of the second gear teeth.

According to one embodiment of the present disclosure, at least one of the first gear teeth and the second gear teeth is made of engineering plastic.

According to one embodiment of the present disclosure, the engineering plastic is polyoxymethylene (POM), polytetrafluoroethylene (PTFE), polyether ether ketone (PEEK) or polyamide (PA).

According to one embodiment of the present disclosure, the first gear teeth and the second gear teeth are both trapezoidal teeth.

According to one embodiment of the present disclosure, the tooth addendum of the trapezoidal teeth is ha=(0.75-0.85)^{∗}m, the tooth dedendum is hf=(0.9-1.1)^{∗}m, and the tooth profile angle Φ is 20°-30°, where m is the modulus of the trapezoidal teeth.

According to one embodiment of the present disclosure, the first gear teeth have a first tooth crest fillet and a first tooth root fillet, and the second gear teeth has a second tooth crest fillet and a second tooth root fillet.

According to one embodiment of the present disclosure, the wave generator includes an oval cam and a flexible bearing, where the flexible bearing is arranged along a contour line of the cam.

In the harmonic reducer disclosed by the present disclosure, the circular spline has a rigid structure except for a flexible and easily deformable structure at the part where the gear teeth are arranged. Compared with a "circular spline" (hereinafter referred to as "flexible circular spline") in which the whole cylinder is flexible, the cylinder torsional deformation of the circular spline adopted by the present disclosure is smaller, and no backlash occurs during torsion like the "flexible circular spline". The backlash of the harmonic reducer disclosed by the present disclosure only comes from the backlash generated by the torsional deformation of a cylinder of the flexspline, thus having high driving precision.

The present disclosure also provides a robot including the harmonic reducer as described above.

Other features and advantages of the present disclosure will be described in detail in the detailed description section that follows.

### BRIEF DESCRIPTION OF THE DRAWINGS

The accompanying drawings are used to provide a further understanding of the present disclosure, constitute a part of this specification, and are used, together with the following specific implementations, to explain the present disclosure, but do not constitute limitations to the present disclosure. In the accompanying drawings:
Fig. 1 is a cutaway view of a harmonic reducer of the present disclosure;
Fig. 2 is a sectional view of trapezoidal teeth used in the present disclosure;
Fig. 3 and Fig. 4 are schematic diagrams of engagement of gear teeth before and after deformation of a flexible ring respectively according to an embodiment of the present disclosure;
Fig. 5 is an enlarged view of part A in Fig. 3; and
Fig. 6 is an enlarged view of part B in Fig. 4.

**DESCRIPTION OF REFERENCE NUMERALS**

| | | |
|---|---|---|
| 11 wave generator | 111 cam | 112 flexible bearing |
| 12 circular spline | 121 first gear teeth | 122 flange |
| 123 rigid ring | 124 flexible ring | 13 flexspline |
| 131 second gear teeth | 1211, 1311 tooth crest fillet | 1212, 1312 tooth root fillet |

### DETAILED DESCRIPTION

Specific implementations of the present disclosure are described in detail below with reference to the accompanying drawings. It should be understood that the specific implementations described herein are merely used to describe and explain the present disclosure rather than limiting the present disclosure.

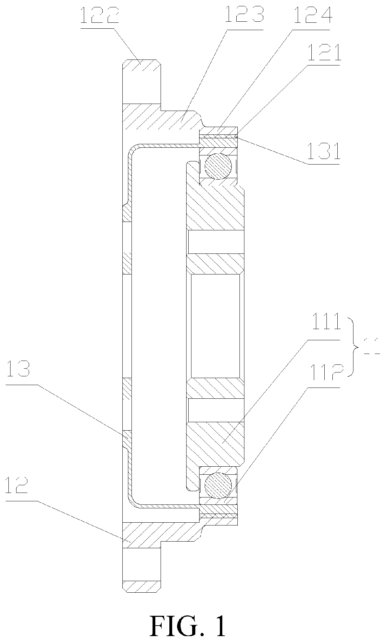

As shown in Fig. 1, according to one aspect of the present disclosure, a circular spline 12 for a harmonic reducer is provided, and the circular spline 12 includes three parts which are coaxially arranged: a flange 122, a rigid ring 123 and a flexible ring 124. The rigid ring 123 is positioned between the flange 122 and the flexible ring 124 in an axial direction of the circular spline 12. The rigid ring 123 is disposed on an end face of the flange 122 for installation and positioning of the harmonic reducer. The flexible ring 124 is disposed on an end face of the rigid ring 123, and an inner peripheral surface of the flexible ring 124 is provided with first gear teeth 121.

The "ring" in the above-mentioned rigid ring and flexible ring refers to the ring described below, and the length of a wall of the ring in an axial direction of the ring is greater than the thickness of the wall of the ring in a radial direction of the ring. However, the present disclosure is not limited thereto, and the length of the wall of the ring may be less than or equal to the thickness of the wall of the ring.

The circular spline 12 is flexible and easily deformable only at the part where the gear teeth are arranged, and the rest (i.e., the flange 122 and the rigid ring 123) is rigid. The outer diameter of the rigid ring 123 is larger than the outer diameter of the flexible ring 124, and in order to avoid interference with the deformation of the flexible ring 124, the outer diameter of the rigid ring 123 is larger than the maximum size of the deformed flexible ring 124.

The rigid ring 123 and the flexible ring 124 may be integrally formed of the same material or may be made of two different materials respectively, as long as the two have different rigidities. When the rigid ring 123 and the flexible ring 124 are made of the same material, as shown in Fig. 1, the wall thickness of the flexible ring 124 may be smaller than that of the rigid ring 123. The flexible ring 124 has a small wall thickness, thus tending to deform in the radial direction. The rigid ring 123 has a large wall thickness which ensures torsional deformation thereof does not happen.

As shown in Fig. 1, according to another aspect of the present disclosure, a harmonic reducer is provided, including a wave generator 11, a circular spline 12, and a flexspline 13. The wave generator 11 includes an oval cam 111 and a flexible bearing 112, where the flexible bearing 112 is arranged along a contour line of the cam 111. The circular spline 12 includes three parts which are coaxially arranged: a flange 122, a rigid ring 123 and a flexible ring 124. The rigid ring 123 is positioned between the flange 122 and the flexible ring 124 in an axial direction of the circular spline 12. The rigid ring 123 is disposed on an end face of the flange 122 for installation and positioning of the harmonic reducer. The flexible ring 124 is disposed on an end face of the rigid ring 123, and an inner peripheral surface of the flexible ring 124 is provided with first gear teeth 121. An outer peripheral surface of the flexspline 13 is provided with second gear teeth 131, and the first gear teeth 121 and the second gear teeth 131 engage with each other. The flexible bearing 112 is disposed on an inner peripheral surface of the flexspline 13.

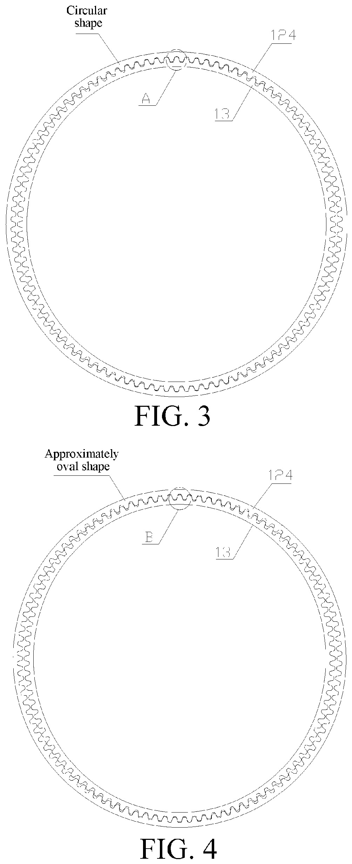

In the harmonic reducer of the present disclosure, a circular pitch of the first gear teeth 121 is slightly smaller than a circular pitch of the second gear teeth 131, therefore, when the flexible ring 124 of the circular spline 12 of the present disclosure is in an assembled state, the first gear teeth 121 thereon are pressed by the second gear teeth 131 of the flexspline 13 in a major axis direction of the wave generator 11, so that the flexible ring 124 extends outwards along with the flexspline 13 in the major axis direction of the wave generator 11, and shortens inwards in a minor axis direction of the wave generator 11, thereby forming an approximately oval ring shape (as shown in Fig. 4). As a result, not only the gear teeth at the major axis of the oval but also some gear teeth between the minor axis and the major axis of the oval will engage, so that more gear teeth engage, and more teeth can bear load, making engagement more sufficient and driving precision higher.

Besides, in the harmonic reducer of the present disclosure, the circular spline 12 is flexible and easily deformable only at the part where the gear teeth are arranged, and the rest (i.e., the flange 122 and the rigid ring 123) is rigid. Compared with a "circular spline" (hereinafter referred to as "flexible circular spline") in which the whole cylinder is flexible, the cylinder torsional deformation of the circular spline 12 adopted by the present disclosure is smaller, and no backlash occurs during torsion like the "flexible circular spline". The backlash of the harmonic reducer disclosed by the present disclosure only comes from the backlash generated by the torsional deformation of a cylinder of the flexspline 13, thus having higher driving precision.

In the circular spline 12 of the present disclosure, the rigid ring 123 is used for positioning during installation of the harmonic reducer. Specifically, for example, when the harmonic reducer is installed on a robot body, an outer peripheral surface of the rigid ring 123 is matched with a wall of a mounting hole in the robot body, so as to realize radial positioning of the harmonic reducer. Therefore, in the present disclosure, an outer diameter of the rigid ring 123 is larger than an outer diameter of the flexible ring 124. In order to avoid interference with the deformation of the flexible ring 124, the outer diameter of the rigid ring 123 is larger than the maximum size of the deformed flexible ring 124, that is, the outer diameter of the rigid ring 123 is larger than the outer diameter at the major axis of the approximately oval ring formed by deformation of the flexible ring 124.

In the harmonic reducer of the present disclosure, the rigid ring 123 and the flexible ring 124 may be integrally formed of the same material or may be made of two different materials respectively, as long as the two have different rigidities. When the rigid ring 123 and the flexible ring 124 are made of the same material, as shown in Fig. 1, the wall thickness of the flexible ring 124 may be smaller than that of the rigid ring 123. The flexible ring 124 has a small wall thickness, thus tending to deform in the radial direction. The rigid ring 123 has a large wall thickness which ensures torsional deformation does not happen.

In the present disclosure, at least one of the first gear teeth 121 and the second gear teeth 131 may be made of engineering plastic with a self-lubricating property, so that there is no need to leave a side clearance between the first gear teeth 121 and the second gear teeth 131 for lubrication, and the driving precision and the driving stability of the harmonic reducer are improved. The first gear teeth 121 and the second gear teeth 131 may both be made of engineering plastic. The engineering plastic may be polyoxymethylene (POM), polytetrafluoroethylene (PTFE), polyether ether ketone (PEEK) or polyamide (PA).

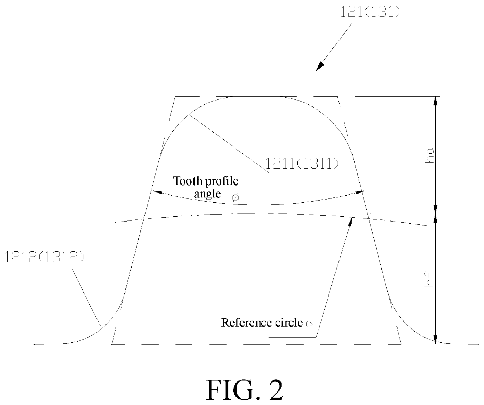

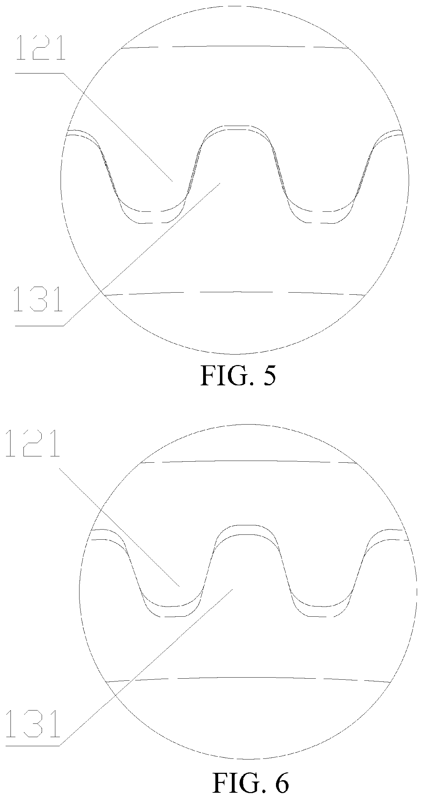

As shown in Fig. 2, in one embodiment of the present disclosure, the first gear teeth 121 and the second gear teeth 131 are both trapezoidal teeth. As shown in Fig. 3 to Fig. 6, since the circular pitch of the first gear teeth 121 is slightly smaller than the circular pitch of the second gear teeth 131, theoretically there is interference between the first gear teeth 121 and the second gear teeth 131 when the flexible ring 124 having the first gear teeth 121 is not deformed (as shown in Fig. 5). However, in the present disclosure, the flexible ring 124 of the circular spline 12 is deformable. When the first gear teeth 121 are pressed by the second gear teeth 131, the flexible ring 124 changes from a circular shape to an approximately oval shape (as shown in Fig. 4), so that the first gear teeth 121 and the second gear teeth 131 are in a zero-side clearance engaging state (as shown in Fig. 6). Since the initial state of the flexible ring 124 is circular, there is a resilience force for the flexible ring 124 to have a tendency to return to a circular shape at all times. Therefore, when the first gear teeth 121 or the second gear teeth 131 are worn, the flexible ring 124 rebounds to make the first gear teeth 121 thereon always attached to the second gear teeth 131. However, in the above embodiment, the first gear teeth 121 and the second gear teeth 131 both adopt the same isosceles trapezoid cross section which gradually expands from the top to the root, so that the first gear teeth 121 and the second gear teeth 131 form bilateral engagement, and the resilience force of the flexible ring 124 can ensure that the side clearance between the gear teeth is zero at all times, thereby further reducing the backlash of the harmonic reducer and improving driving precision.

In the present disclosure, as shown in Fig. 2, the tooth addendum of the trapezoidal teeth is ha=(0.75-0.85)^{∗}m, the tooth dedendum is hf=(0.9-1.1)^{∗}m, and the tooth profile angle Φ is 20°-30°, where m is the modulus of the trapezoidal teeth. The tooth addendum ha is the radial distance between a reference circle d and an tooth crest circle, and the tooth dedendum hf is the radial distance between the reference circle d and a tooth root circle. By using trapezoidal teeth within the above parameter scope as the first gear teeth 121 and the second gear teeth 131, the side clearance between teeth can be better reduced.

As shown in Fig. 2, the first gear teeth 121 has a first tooth crest fillet 1211 and a first tooth root fillet 1212, and the second gear teeth 131 has a second tooth crest fillet 1311 and a second tooth root fillet 1312. The first tooth crest fillet 1211 and the second tooth crest fillet 1311 can ensure smooth engaging-in and engaging-out of the gear teeth. The first tooth root fillet 1212 and the second tooth root fillet 1312 can improve the stress condition received by the gear teeth and reduce stress concentration.

To sum up, a part of the circular spline 12 of the present disclosure is the deformable flexible ring 124 with the gear teeth. Combined with the characteristics of trapezoidal gear teeth, it can be ensured that the side clearance between the gear teeth can always be zero even after the gear teeth are worn. The rigid ring 123 of the circular spline 12 for installation and positioning has sufficient rigidity and will not generate backlash during torsion like the "flexible circular spline". Compared with the prior art, the harmonic reducer disclosed by the present disclosure can automatically adjust the side clearance between the teeth and ensure that the side clearance between the teeth is zero at all times, thereby reducing the backlash of the harmonic reducer and improving driving precision.

According to yet another aspect of the present disclosure, a robot is provided, and the robot adopts the harmonic reducer as described above.

Although preferred implementations of the present disclosure are described in detail above with reference to the accompanying drawings, the present disclosure is not limited to specific details in the foregoing implementations. Various simple variations can be made to the technical solutions of the present disclosure within the scope of the technical idea of the present invention, and such simple variations all fall within the protection scope of the present disclosure.

It should be further noted that the specific technical features described in the foregoing specific implementations can be combined in any appropriate manner provided that no conflict occurs. To avoid unnecessary repetition, various possible combination manners are not further described in the present disclosure.

In addition, various different implementations of the present disclosure may alternatively be combined randomly. Such combinations should also be considered as the content disclosed in the present disclosure provided that these combinations do not depart from the concept of the present disclosure.

## Claims

1. A circular spline (12) for a harmonic reducer, comprising a flange (122), a rigid ring (123) and a flexible ring (124) which are coaxially arranged, wherein the rigid ring (123) is axially positioned between the flange (122) and the flexible ring (124), and an inner peripheral surface of the flexible ring (124) is provided with first gear teeth (121).

2. The circular spline according to claim 1, wherein an outer diameter of the rigid ring (123) is larger than an outer diameter of the flexible ring (124).

3. The circular spline according to claim 2, wherein the outer diameter of the rigid ring (123) is larger than the maximum outer diameter of the deformed flexible ring (124).

4. The circular spline according to any one of claims 1 to 3, wherein the rigid ring (123) and the flexible ring (124) are made of different materials.

5. The circular spline according to any one of claims 1 to 3, wherein the rigid ring (123) and the flexible ring (124) are made of the same material.

6. The circular spline according to claim 5, wherein the wall thickness of the rigid ring (123) is larger than the wall thickness of the flexible ring (124).

7. A harmonic reducer, comprising a wave generator (11), the circular spline (12) according to any one of claims 1 to 6 and a flexspline (13), wherein the wave generator (11) is arranged on an inner peripheral surface of the flexspline (13), second gear teeth (131) are arranged on an outer peripheral surface of the flexspline (13), and the first gear teeth (121) engage with the second gear teeth (131).

8. The harmonic reducer according to claim 7, wherein a circular pitch of the first gear teeth (121) is smaller than a circular pitch of the second gear teeth (131).

9. The harmonic reducer according to claim 7, wherein at least one of the first gear teeth (121) and the second gear teeth (131) is made of engineering plastic.

10. The harmonic reducer according to claim 9, wherein the engineering plastic is polyoxymethylene (POM), polytetrafluoroethylene (PTFE), polyether ether ketone (PEEK) or polyamide (PA).

11. The harmonic reducer according to any one of claims 7 to 10, wherein the first gear teeth (121) and the second gear teeth (131) are both trapezoidal teeth.

12. The harmonic reducer according to claim 11, wherein the tooth addendum of the trapezoidal teeth is ha=(0.75-0.85)^{∗}m, the tooth dedendum is hf=(0.9-1.1)^{∗}m, and the tooth profile angle Φ is 20°-30°, wherein m is the modulus of the trapezoidal teeth.

13. The harmonic reducer according to claim 11, wherein the first gear teeth (121) have a first tooth crest fillet (1211) and a first tooth root fillet (1212), and the second gear teeth (131) have a second tooth crest fillet (1311) and a second tooth root fillet (1312).

14. The harmonic reducer according to any one of claims 7 to 13, wherein the wave generator (11) comprises an oval cam (111) and a flexible bearing (112), wherein the flexible bearing (112) is arranged along a contour line of the cam (111).

15. A robot, comprising the harmonic reducer according to any one of claims 7 to 14.
